# EUROPEAN PATENT SPECIFICATION

(11) **EP 1 445 848 B1**
(45) Date of publication and mention of the grant of the patent: **17.01.2007**
(21) Application number: 04011071.0
(22) Date of filing: 23.02.2001
(51) Int. Cl.: H02K 1/16, H02K 19/22, H02K 3/28

(54) **Alternator**
Wechselstromgenerator
Alternateur

(30) Priority: 24.02.2000 JP 2000047781; 29.02.2000 JP 2000055021
(43) Date of publication of application: 11.08.2004
(62) Divisional of application: 01103681.1
(73) Proprietor: MITSUBISHI DENKI KABUSHIKI KAISHA, Chiyoda-ku Tokyo 100-8310 (JP)
(72) Inventor: Higashino, Kyoko, Chiyoda-ku Tokyo 100-8310 (JP); Asao, Yoshihito, Chiyoda-ku Tokyo 100-8310 (JP); Adachi, Katsumi, Chiyoda-ku Tokyo 100-8310 (JP); Kometani, Haruyuki, Chiyoda-ku Tokyo 100-8310 (JP)
(74) Representative: HOFFMANN EITLE

(56) References cited:
- EP-A- 0 881 752
- EP-A- 0 977 342
- US-A- 3 226 581
- PATENT ABSTRACTS OF JAPAN vol. 016, no. 192 (E-1199), 11 May 1992 (1992-05-11) -& JP 04 026345 A (NIPPONDENSO CO LTD), 29 January 1992 (1992-01-29)
- PATENT ABSTRACTS OF JAPAN vol. 007, no. 226 (E-202), 7 October 1983 (1983-10-07) & JP 58 116031 A (TOKYO SHIBAURA DENKI KK), 11 July 1983 (1983-07-11)
- PATENT ABSTRACTS OF JAPAN vol. 2000, no. 05, 14 September 2000 (2000-09-14) -& JP 2000 050588 A (DENSO CORP), 18 February 2000 (2000-02-18)
- PATENT ABSTRACTS OF JAPAN vol. 010, no. 197 (E-418), 10 July 1986 (1986-07-10) & JP 61 042258 A (MATSUSHITA ELECTRIC IND CO LTD), 28 February 1986 (1986-02-28)
- PATENT ABSTRACTS OF JAPAN vol. 017, no. 091 (E-1324), 23 February 1993 (1993-02-23) & JP 04 285444 A (FUJITSU GENERAL LTD), 9 October 1992 (1992-10-09)

## Description

### BACKGROUND OF THE INVENTION

### 1. Field of the Invention

The present invention relates to an alternator in which alternating voltage is generated in a stator by rotation of a rotor.

### 2. Description of the Related Art

In recent years, there has been an increasing demand for an automotive alternator that generates more power because of increasing vehicular load, whereas a mounting space therefore is decreasing because of a trend toward a smaller vehicular engine room.

In addition, there has been another increasing demand for reduced noises both inside and outside a vehicle, and engine noises are being decreased to respond to such a demand. A noise of an automotive alternator, which constantly operates to generate power to supply electrical load to a vehicle, has been a problem to be solved in achieving reduced noises. In the automotive alternator rotationally driven over a relatively wide revolution region from low speed to high speed, a wind noise or an electromagnetic noise thereof has been a topic to be tackled. Especially high-frequency wind noises or electromagnetic noises in a low engine speed region to a normal working region have been posing a problem because they sound particularly uncomfortable to the ears, having different frequencies from those of noises of other engine or engine accessories.

In JP-A-04026345 it is proposed to reduce leakage flux and to diminish a ripple by mounting two tooth-shaped cores of a stator core per one phase and one pole for the number of phases of a stator coil and the number of magnetic poles of a rotor in the number of the tooth-shaped cores.

IN JP-A- 58116031 it is proposed to displace the center of a hole in the core of a rotary electric machine to the centers of respective slots formed at an equal interval at the adjacent slots.

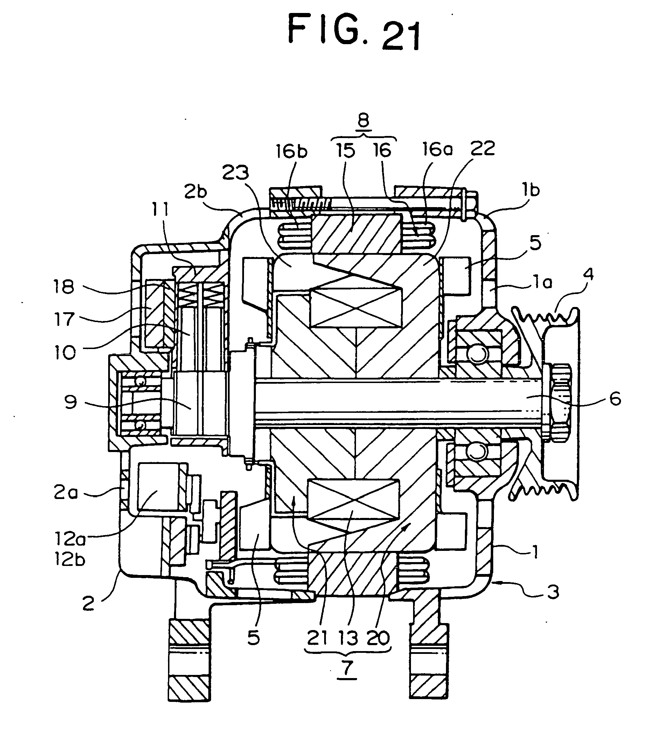

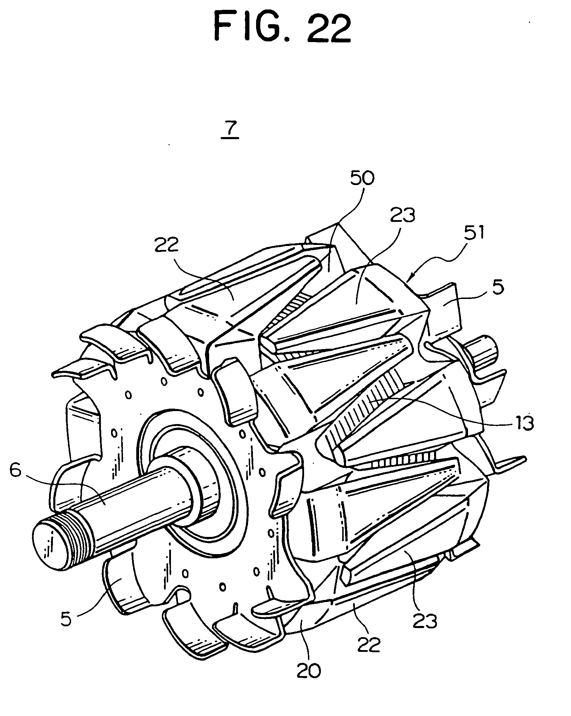

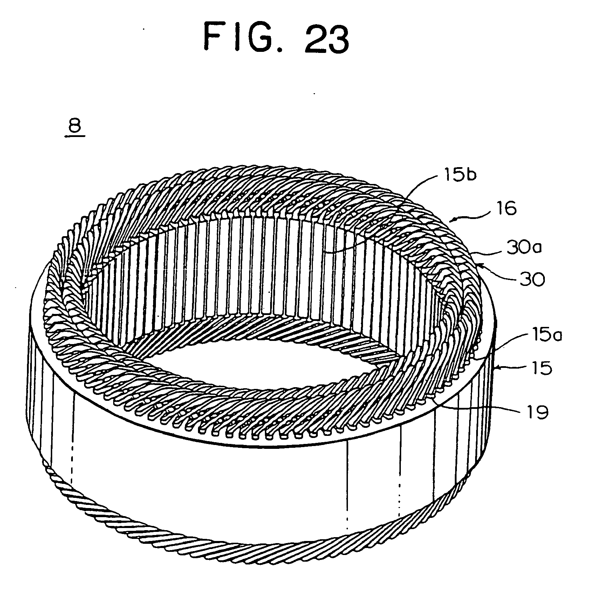

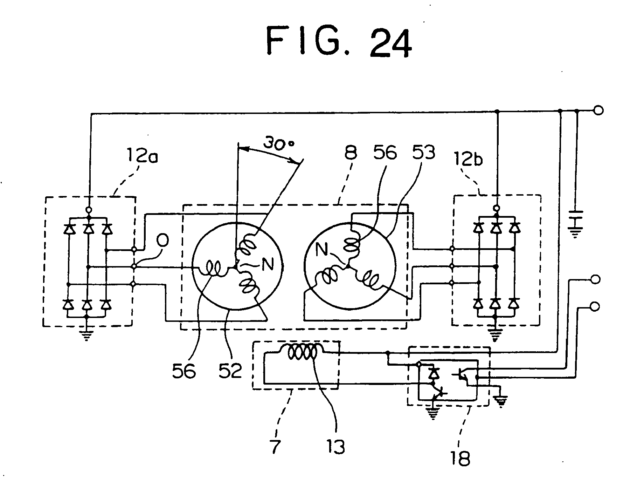

Fig 21 is a sectional view of another conventional automotive alternator (hereinafter referred to simply as "alternator"), Fig. 22 is a perspective view of a rotor of Fig. 21, Fig. 23 shows a stator of Fig. 21 (a lead wire and a neutral wire of a stator winding are not shown), and Fig. 24 is an electrical circuit diagram of the alternator of Fig. 21.

The alternator includes: a case 3 composed of an aluminum front bracket 1 and an aluminum rear bracket 2; a shaft 6 rotatably disposed in the case 3 and which has a pulley 4 secured to one end thereof; a Lundell-type rotor 7 secured to the shaft 6; fans 5 secured to both axial ends of the rotor 7; a stator 8 secured to an inner wall of the case 3; a slip ring 9 secured to the other end of the shaft 6 and which supplies electric current to the rotor 7; a brush 10 that slides in contact with the slip ring 9; a brush holder 11 accommodating the brush 10; a first rectifier 12a and a second rectifier 12b electrically connected to the stator 8 to convert alternating current generated in the stator 8 into direct current; a heat sink 17 fitted on the brush holder; and a regulator 18 adhesively fastened to the heat sink 17 and which adjusts a magnitude of an alternating voltage generated in the stator 8.

The rotor 7 is equipped with a field winding 13 for generating magnetic flux on passage of electric current, and a pole core 51 covering the field winding 13 in which magnetic poles are produced by the magnetic flux. The pole core 51 has a pair of a first pole core assembly 20 and a second pole core assembly 21 that intermesh with each other. The first pole core assembly 20 and the second pole core assembly 21 are made of iron and have claw-shaped magnetic poles 22 and 23 at their ends. Spaces 50 are formed between adjacent claw-shaped magnetic poles 22 and 23 to prevent magnetic flux from leaking from between the claw-shaped magnetic poles 22 and 23, and also to function as cooling passages for cooling the field winding 13.

The stator 8 is provided with a stator core 15 and a stator winding 16. The stator winding 16 has two windings, namely, a first three-phase stator winding 52 and a second three-phase stator winding 53, in which conductors are wound onto the stator core 15 with a phase difference of a 30-degree electrical angle.

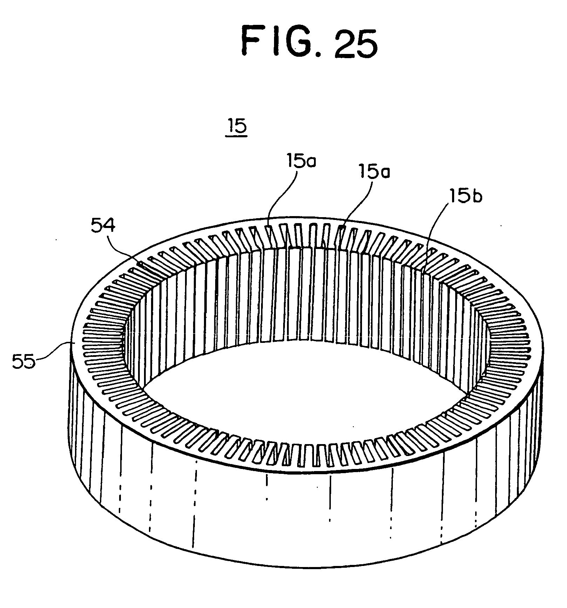

The stator core 15 shown in Fig. 25 is formed by punching steel sheet into a comb-like plate with equidistantly arranged teeth, and by winding or laminating the comb-like plate into an annular shape. The stator core 15 has an annular core back 55, and a plurality of teeth 54 in which a plurality of slots 15a and openings 15b are formed, the slots 15a and the openings 15b radially extending inward from the core back 55 and being disposed equidistantly in a circumferential direction.

In this example, the stator core 15 includes the two windings, namely, the first three-phase stator winding 52 and the second three-phase stator winding 53, and the rotor 7 has sixteen magnetic poles with two three-phase portions corresponding to each pole. There are 96 slots 15a, openings 15b, and teeth 54, which are formed at regular pitches of 3.75-degree mechanical angles.

The first three-phase stator winding 52 and the second three-phase stator winding 53 have a front coil end 16a and a rear coil end 16b respectively projecting from both end surfaces of the stator core 15. The coil ends 16a and 16b are composed of a plurality of extending portions 30a, which are heat radiating portions. The extending portions 30a having the same shape are arranged orderly in a circumferential direction in two rows apart from each other in a radial direction.

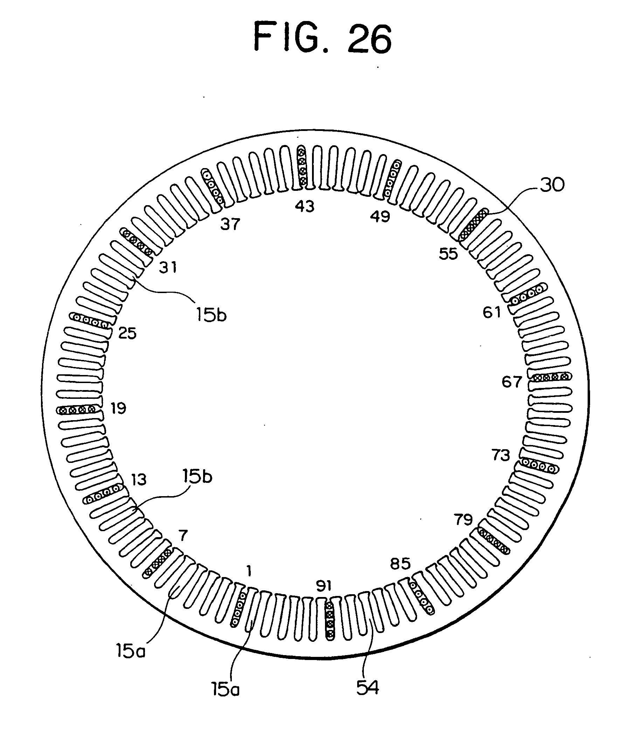

Fig. 26 shows a winding structure of a stator winding 56 for one phase of the three-phase stator windings 52 and 53. In the drawing, dark dots in circles in the slots 15a of the stator 15 denote conductors 30 that extend from the front bracket 1 to the rear bracket 2, and cross marks (x) in the circles in the slots 15a of the stator 15 denote the conductors 30 that extend from the rear bracket 2 to the front bracket 1.

The stator winding 56 for the one phase is formed of the copper conductors 30, each of which has its outer surface coated with enamel. The conductors 30 of the first three-phase stator winding 52 are wave-wound at every six slots from slot No. 1 to slot No. 91. In each slot 15a, the conductors 30 are radially arranged in four layers in one row. In the stator windings for the remaining two phases of the first three-phase stator winding 52, the conductors 30 are wave-wound at every six slots from slot Nos. 3 to 93, and slot Nos. 5 to 95, respectively, and the conductors 30 are radially arranged in four layers in one row in each slot 15a.

The conductors 30 of the second three-phase stator winding 53 are wave-wound at every six slots from slot No. 2 to slot No. 92. In each slot 15a, the conductors 30 are radially arranged in four layers in one row. In the stator windings for the remaining two phases of the second three-phase stator winding 53, the conductors 30 are wave-wound at every six slots from slot Nos. 4 to 94, and slot Nos. 6 to 96, respectively, and the conductors 30 are radially arranged in four layers in one row in each slot 15a.

Furthermore, as shown in Fig. 24, the stator windings 56 for the three phases are star-connected to form the first three-phase stator winding 52, and the additional stator windings 56 for the three phases are also star-connected to form the second three-phase stator winding 53. The three-phase stator windings 52 and 53 are provided in the slots 15a with a phase difference of a 30-degree electrical angle from each other, and are electrically connected to the first rectifier 12a and the second rectifier 12b, respectively. Direct current outputs of the rectifiers 12a and 12b are connected in parallel and combined.

In an automotive alternator of the above construction, current is supplied by a battery (not shown) through the brush 10 and slip ring 9 to the field winding 13 so as to generate magnetic flux, whereby the claw-shaped magnetic poles 22 of the first pole core assembly 20 are polarized with north-seeking (N) poles, while the claw-shaped magnetic poles 23 of the second pole core assembly 21 are polarized with south-seeking (S) poles.

The pulley 4 is rotated by an engine, and the rotor 7 rotates together with the shaft 6. This causes a rotating magnetic field to be imparted to the three-phase stator windings 52 and 53, and an electromotive force is generated. The alternating electromotive force is converted into direct current by means of the rectifiers 12a and 12b, a magnitude thereof is adjusted by the regulator 18, and the battery is recharged.

In the automotive alternator having the construction described above, there are two slots per pole per phase, the first three-phase stator winding 52 and the second three-phase stator winding 53 are incorporated in the stator core 15 with the 30-degree electrical phase difference, and measures against output surges are provided. Similar technical contents are disclosed in Japanese Unexamined Patent Publication No. HEI4-26345.

However, in the automotive alternator having the above construction, a magnetic attractive force is produced between the rotor 7 and the stator 8 during power generation because of an interaction between a rotating magnetic field including higher harmonics produced by the claw-shaped magnetic poles 22 and 23 of the rotor 7 and an alternating magnetic field including higher harmonics generated from alternating current produced at the stator winding 16, and an interaction between a rotating magnetic field including higher harmonics generated from the claw-shaped magnetic poles 22 and 23 of the rotor 7, and permeance higher harmonics generated by the stator slots 15a. The electromagnetic attractive force leads to an electromagnetic exciting force of the claw-shaped magnetic poles 22 and 23 of the rotor 7 and the stator core 15, with consequent occurrence of vibrations and electromagnetic noises.

Reducing the vibrations and noises requires the electromagnetic exciting force be reduced. For this purpose, it is important to reduce a magnetomotive force higher harmonics and slot higher harmonics produced in the stator 8. It is particularly important to reduce fifth, seventh, eleventh, and thirteenth higher harmonics, which are large among the magnetomotive force higher harmonics of the stator 8, and the eleventh and thirteenth higher harmonics, which are large in the slot higher harmonics.

In the automotive alternator of the above construction, as will be discussed hereinafter, when a basic frequency of output current is denoted as f, it is possible to reduce a sixth higher harmonic component of a 6f frequency. However, a twelfth component is large, and there are two slots 15a per pole in a phase; therefore, the twelfth component of a rotor magnetomotive force higher harmonic agrees with the number of the slots 15a, so that electromagnetic noises due to stator slot higher harmonics accordingly increase. Furthermore, air interference noises corresponding to a 12f frequency caused by the slots 15a are increased, and the wind noises and the electromagnetic noises interfere with each other, producing uncomfortable noises. The 12f-component noise, in particular, corresponds to a 96th component if the rotor 7 has sixteen poles when it is converted into a rotational order ratio of a number of revolutions. Thus, in a range of number of revolutions from 2000 to 6000 rpm of the automotive alternator, which corresponds to an engine speed in a range from idling speed to a normal speed, noises reach a range of frequencies from 3.2 kHz to 9.6 kHz when the rotor 7 has, for example, sixteen poles. This frequency range covers a high-frequency band of 2 to 10 kHz, to which the ears are most sensitive, posing a problem in that the noises are extremely unpleasant to passengers.

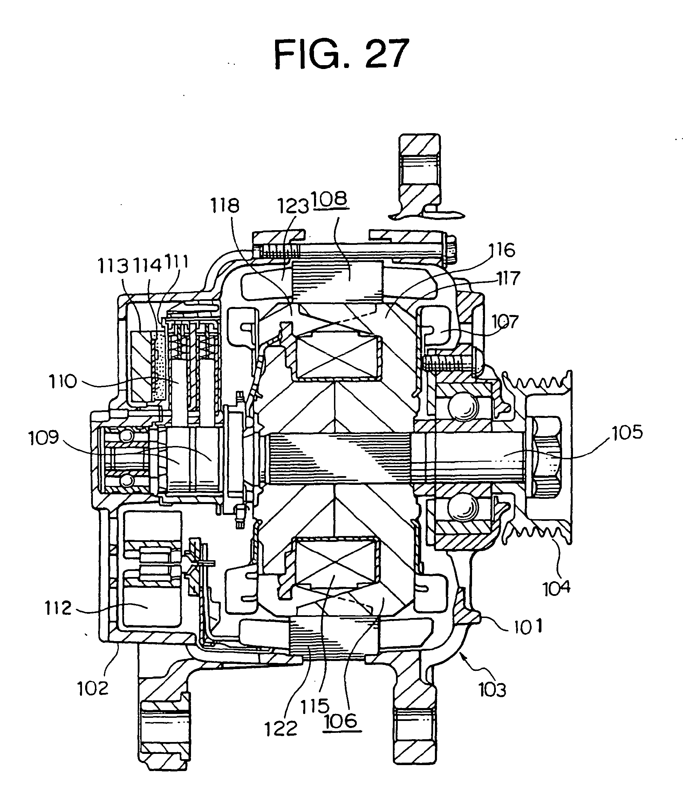

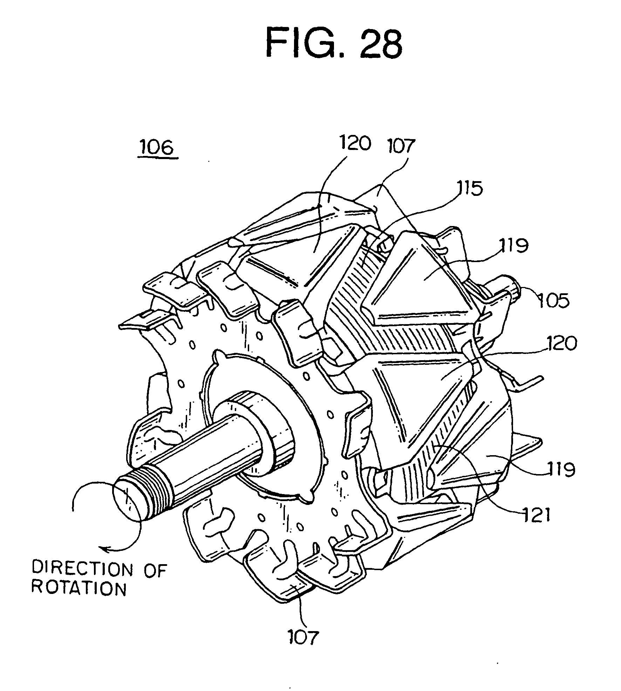

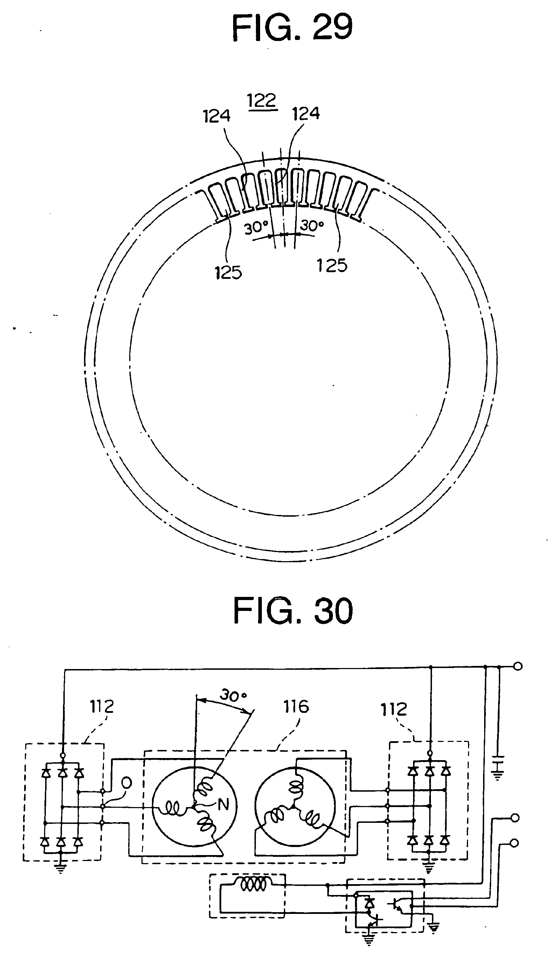

Fig. 27 is a sectional side elevation of another conventional automotive alternator, Fig. 28 is a perspective view of a rotor of Fig. 27, Fig. 29 is a front view of a stator core applied to a stator of the conventional automotive alternator, and Fig. 30 is a circuit diagram of the conventional automotive alternator. The conventional alternator shown in the drawings includes: a case 103 composed of an aluminum front bracket 101 and an aluminum rear bracket 102; a shaft 105 rotatably disposed in the case 103 and which has a pulley 104 secured to one end thereof; a Lundell-type rotor 106 secured to the shaft 105; fans 107 secured to both ends of the rotor 106; a stator 108 secured to an inner wall surface of the case 103; a slip ring 109 secured to the other end of the shaft 105 and which supplies electric current to the rotor 106; a brush 110 that slides in contact with the slip ring 109; a brush holder 111 accommodating the brush 110; a rectifier 112 electrically connected to the stator 108 to convert alternating current generated in the stator 108 into direct current; a heat sink 113 fitted on the brush holder 111; and a regulator 114 adhesively fastened to the heat sink 113 and which adjusts a magnitude of an alternating voltage generated in the stator 108.

The rotor 106 is equipped with a rotor coil 115 for generating magnetic fluxes on passage of electric current, and a pole core 116 covering the rotor coil 115 in which magnetic poles are produced by the magnetic fluxes. The pole core 116 has a pair of a first pole core assembly 117 and a second pole core assembly 118 that intermesh with each other. The first pole core assembly 117 and the second pole core assembly 118 are made of iron and have claw-shaped magnetic poles 119 and 120 at their ends. Spaces are formed between adjacent claw-shaped magnetic poles 119 and 120 to prevent magnetic fluxes from leaking from between the claw-shaped magnetic poles 119 and 120, and also to function as cooling passages for cooling the rotor coil 115.

The stator 108 is provided with a stator core 122 and two sets of three-phase stator windings 123 in which conductors are wound around the stator core 122 with a phase difference of a 30-degree electrical angle (see Fig. 29 and Fig. 30). The stator core 122 is formed by punching a steel sheet into a comb-like plate with equidistantly arranged teeth, and by rolling or laminating the comb-like plate into an annular shape. An inner periphery of the stator core 122 has slots 125 and teeth 124 that extend in the axial direction.

This example includes the two sets of the three-phase stator windings 123, and the rotor 106 has twelve magnetic poles, two three-phase portions corresponding to each pole. Seventy-two slots 125 and teeth 124, respectively, are formed. The annular stator core 122 has the slots 125 formed at equal intervals of 5-degree mechanical angles (360°/72). At this time, the seventy-two slots uniformly correspond to the twelve poles, so that the slots 125 are formed at uniform intervals of 30-degree electrical angles. The two sets of three-phase stator windings 123 in Y-Y connection are respectively provided with a phase difference of a 30-degree electrical angle in the slots 125 and electrically connected to rectifiers 112.

In an automotive alternator having the above construction, current is supplied by a battery (not shown) through the brush 110 and a slip ring 109 to the rotor coil 115 so as to generate magnetic fluxes, whereby claw-shaped magnetic poles 119 of the first pole core assembly 117 are polarized with north-seeking (N) poles, while the claw-shaped magnetic poles 120 of the second pole core assembly 118 are polarized with south-seeking (S) poles.

The pulley 104 is rotated by an engine, and the rotor 106 rotates together with the shaft 105. This causes a rotating magnetic field to be imparted to the stator winding 123, and an electromotive force is generated. The AC electromotive force is converted into direct current by means of the rectifiers 112, and a magnitude of the direct current is adjusted by the regulator 114 before recharging the battery.

In the automotive alternator, one each of slots 125 of the stator core 122 is provided for each set and each phase of the stator windings 123 and for each magnetic pole of the rotor 106. Since there are seventy-two slots 125 and teeth 124, the circumferential widths of the teeth 124 are small; hence, there are fewer chances in which leakage magnetic fluxes produced between adjoining claw-shaped magnetic poles 119 and 120 of the rotor 106 leak out through the same teeth 124.

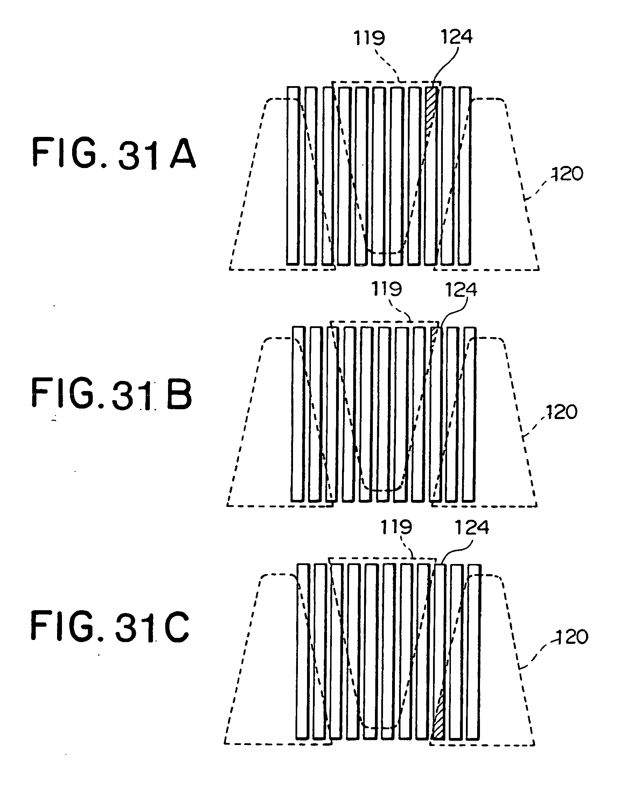

Fig. 31 illustrates a positional relationship between the teeth 124, the slots 125, and the claw-shaped magnetic poles 119 and 120. Fig. 31A shows a state wherein the teeth 124 overlap with only the claw-shaped magnetic pole 119, Fig. 31B shows a state wherein the teeth 124 overlap with the claw-shaped magnetic poles 119 and 120, and Fig. 31C shows a state wherein the teeth 124 overlap with only the claw-shaped magnetic pole 120. Thus, in the conventional automotive alternator, the teeth 124 have a narrow circumferential width, and the time during which magnetic fluxes leak to the teeth 124 is short. This means a less reduction in effective magnetic fluxes for the stator windings 123 caused by leakage magnetic fluxes, leading to reduced pulsation in magnetic fluxes. An art similar to that of the automotive alternator described above has been disclosed in Japanese Unexamined Patent Application Publication No. 4-26345.

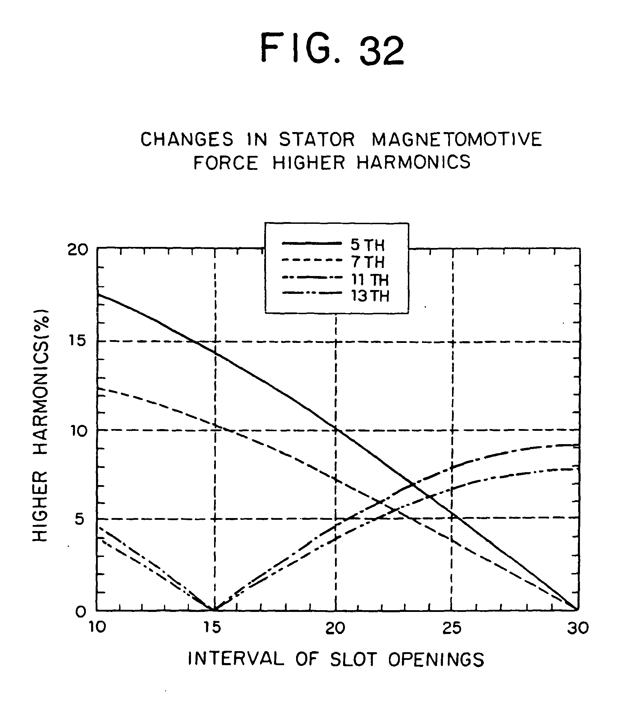

In the conventional automotive alternator having the construction set forth above, if slot openings are arranged at equal intervals of 30-degree electrical angles, then spatial fifth and seventh higher harmonics of magnetic flux density waveforms do not appear. This is illustrated in Fig. 32 prepared by the inventors of the application concerned who have performed analyses of electromagnetic fields. Referring to Fig. 32, the axis of abscissa indicates the interval of slot openings. Electrical angles are at equal intervals at 30 degrees, while they are at nonuniform intervals at, for example, 24 degrees (24 degrees and 36 degrees are repeated). The axis of ordinates indicates a ratio of stator magnetomotive force higher harmonics to a fundamental wave. However, the magnetomotive force higher harmonics of the stator 8 have large spatial eleventh and thirteenth higher harmonics. Hence, if the magnetomotive force higher harmonics of the rotor 6 include the eleventh or thirteenth higher harmonics, then their mutual interference prevents adequate suppression of magnetic flux pulsation, so that fluctuation in a generated voltage cannot be adequately controlled. Thus, there has been a problem in that a magnetic attraction force is produced between the claw-shaped magnetic poles 119 and 120 of the rotor 106 and the stator 108, and resonance takes place in the stator 108, the case 103, etc. or the claw-shaped magnetic poles 119 and 120 of the rotor 106 vibrate, generating noises uncomfortable to an occupant.

Furthermore, if slots are disposed at equal pitches, then marked synchronous pulsation based on the number of slots takes place, producing noises that are even more uncomfortable.

When the gap between adjoining claw-shaped magnetic poles 119 and 120 can be reduced, if the teeth 124 are made narrower accordingly, then a problem arises in that a main magnetic flux decreases although invalid magnetic fluxes can be reduced.

### SUMMARY OF THE INVENTION

The present invention aims to solve the problem set forth above, and an object of the present invention is to provide an alternator capable of reducing unpleasant high-frequency noises, and capable of reducing invalid magnetic fluxes and also reducing uncomfortable noises.

According to the present invention this object is achieved by an alternator having the features of claim 1.

Further, preferred embodiments of the present invention are outlined in the dependent claims. centerlines extending in a radial direction of openings of adjoining slots, and a first three-phase stator winding and a second three-phase stator winding are wound around a stator core with a phase difference of an electrical angle of 31 to 34 degrees.

In a preferred form of the alternator in accordance with the present invention, a circumferential width of a tooth is set such that both ends of a tooth located between adjoining claw-shaped magnetic poles overlap proximal ends of the two claw-shaped magnetic poles, as observed from a radial direction.

In another preferred form of the alternator in accordance with the present invention, side surfaces of the claw-shaped magnetic poles have chamfered portions.

In yet another preferred form of the alternator in accordance with the present invention, the three-phase stator windings have star connections, and neutral points of the star connections are electrically connected to rectifiers for rectifying ac output.

In a further preferred form of the alternator in accordance with the present invention, circumferential widths of the openings of the slots are regular, while circumferential widths of distal ends of adjoining teeth are irregular.

In a further preferred form of the alternator in accordance with the present invention, circumferential widths of the openings of adjoining slots are irregular, while circumferential widths of distal ends of the teeth are regular.

In a further preferred form of the alternator in accordance with the present invention, the first three-phase stator winding and the second three-phase stator winding are wound around the stator core with a phase difference of an electrical angle of 32.5 degrees.

According to another aspect of the present invention, there is provided an alternator comprising: a stator having a stator core in which a plurality of slots that open on an inner peripheral side and extend in an axial direction, and two or more sets of stator windings incorporated in the slots; and a rotor having a rotor coil rotatably provided inside the stator to generate magnetic fluxes on the passage of electric current and a pole core which covers the coil and in which a plurality of claw-shaped magnetic poles are formed by the magnetic fluxes, the number of the slots per set, per phase, and per pole being one, the stator windings being disposed such that two sets of three-phase coils have a phase difference from each other, and center-to-center intervals of circumferential gaps of adjoining slot openings being nonuniform, wherein the claw-shaped magnetic poles of the rotor are formed such that at least a narrow tooth of teeth formed between the slots of the opposing stator is positioned to overlap two of the claw-shaped magnetic poles that are adjacent in a direction of rotation of the rotor and have opposite polarities.

In a preferred form of the present invention, the center-to-center intervals of the circumferential gaps of the adjoining slot openings are repeatedly set at electrical angles of α degrees and (60-α) degrees, the α degrees ranging from 16 degrees to 29 degrees.

In another preferred form of the present invention, the center-to-center intervals of the circumferential gaps of the adjoining slot openings are repeatedly set at electrical angles of α degrees and (60-α) degrees, the α degrees ranging from 22 degrees to 24 degrees.

In yet another preferred form of the present invention, each of the teeth that define the slots of the stator core has a jaw extending from a distal end portion thereof on at least one end in a circumferential direction, and the center-to-center intervals of the circumferential gaps of adjoining slot openings are set to be nonuniform based on an extending length of the jaw.

In still another preferred form of the present invention, the center-to-center intervals of circumferential gaps of the adjoining slot openings are set to be nonuniform based on circumferential widths of the teeth that define the slots of the stator core.

In a further preferred form of the present invention, the stator windings outputs.

### BRIEF DESCRIPTION OF THE DRAWINGS

Fig. 1 is a perspective view of a rotor of an automotive alternator in accordance with present invention;
Fig. 2 is a diagram illustrating, in a flattened fashion, an essential section of a stator core of the automotive alternator in accordance with the present invention;
Fig. 3 is an electrical circuit diagram of the automotive alternator in accordance with the present invention;
Fig. 4 is a diagram showing changes in a fifth higher harmonic component of a magnetomotive force of the rotor;
Fig. 5 is a diagram showing changes in a seventh higher harmonic component of the magnetomotive force of the rotor;
Fig. 6 is a diagram showing changes in an eleventh higher harmonic component of the magnetomotive force of the rotor;
Fig. 7 is a diagram showing changes in a thirteenth higher harmonic component of the magnetomotive force of the rotor;
Fig. 8 is a diagram showing changes in each ordinal higher harmonic component of a magnetomotive force of a stator;
Fig. 9 is a diagram showing changes in electromagnetic exciting force higher harmonics;
Fig. 10 is a diagram showing a relationship between an electrical angle phase difference of a three-phase stator winding, low speed output, and noise level;
Fig. 11 is a diagram showing a positional relationship between teeth and claw-shaped magnetic poles of an automotive alternator according to the present invention;
Fig. 12 is a diagram illustrating, in a flattened fashion, an essential section of a stator core of an automotive alternator in accordance with the present invention;
Fig. 13 is a diagram showing a relationship between an electrical angle phase difference and 96th component of wind noise;
Fig. 14 is a schematic representation showing a stator core of an automotive alternator according to the present invention;
Fig. 15 is a perspective view showing a stator;
Fig. 16 is an electrical circuit diagram of the automotive alternator;
Fig. 17 illustrates positional relationships between teeth, slots, and claw-shaped magnetic poles in accordance with the present invention;
Fig. 18 is a perspective view showing a stator having another construction;
Fig. 19 is a schematic representation of a stator core of an automotive alternator according to the present invention;
Fig. 20 is an electrical circuit diagram of an automotive alternator according to the present invention;
Fig. 21 is a sectional view of a conventional automotive alternator;
Fig. 22 is a perspective view of a rotor of Fig. 21;
Fig. 23 is a perspective view of a stator of Fig. 21;
Fig. 24 is an electrical circuit diagram of the automotive alternator of Fig. 21;
Fig. 25 is a perspective view of a stator core of Fig. 21;
Fig. 26 is a diagram showing a winding structure of a stator winding assembly of one phase of the stator winding shown in Fig. 21;
Fig. 27 is a sectional side elevation of another conventional automotive alternator;
Fig. 28 is a perspective view of a rotor of Fig. 27;
Fig. 29 is a front view of a stator core applied to a stator of the conventional automotive alternator;
Fig. 30 is a circuit diagram of the conventional automotive alternator;
Fig. 31 illustrates a positional relationship between teeth, slots, and claw-shaped magnetic poles of the conventional automotive alternator; and
Fig. 32 is a diagram showing changes in higher harmonics of a stator magnetomotive force.

### DESCRIPTION OF THE PREFERRED EMBODIMENTS

The following will describe embodiments of an alternator in accordance with the present invention. Like or equivalent components will be assigned like reference numerals in descriptions thereof.

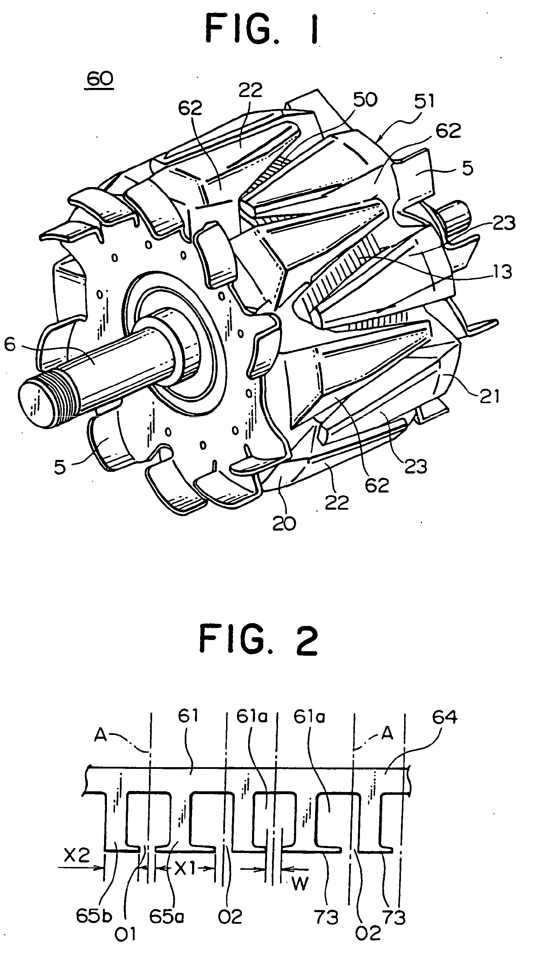

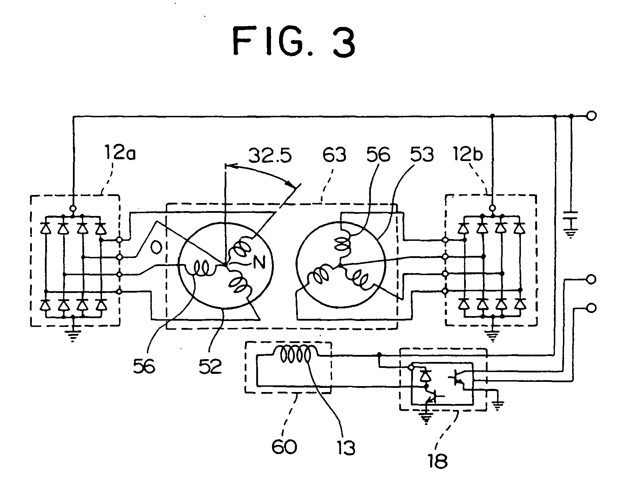

Fig. 1 is a perspective view of a rotor 60 of an automotive alternator in accordance with the present invention, Fig. 2 is an explanatory diagram showing, in a flattened fashion, a stator core 61 of a stator of the automotive alternator, and Fig. 3 is an electrical circuit diagram of the automotive alternator.

The rotor 60 is equipped with a field winding 13 for generating magnetic flux on passage of electric current, and a pole core 51 covering the field winding 13 in which magnetic poles are produced by the magnetic flux. The pole core 51 has a pair of a first pole core assembly 20 and a second pole core assembly 21 that intermesh with each other. The first pole core assembly 20 and the second pole core assembly 21 are made of iron, and have claw-shaped magnetic poles 22 and 23 at their ends. Spaces 50 are formed between adjacent claw-shaped magnetic poles 22 and 23 to prevent magnetic flux from leaking from between the claw-shaped magnetic poles 22 and 23, and also to function as cooling passages for cooling the field winding 13. Chamfered portions 62 are formed at proximal ends of side surfaces in a rotational direction of the claw-shaped magnetic poles 22 and 23.

The stator 63 is provided with a stator core 61 and a stator winding 16. The stator winding 16 has two windings, namely, a first three-phase stator winding 52 and a second three-phase stator winding 53 in which conductors are wound onto the stator core 15 with a phase difference of 32.5-degree electrical angle.

The stator core 61 is formed by punching steel sheets into a comb shape with equidistantly arranged teeth, and by winding or laminating the comb-shaped plate into an annular shape. The stator core 61 has an annular core back 64, teeth 65a and 65b radially extending inward from the core back 64.

Slots 61 a, each of which has the teeth 65a and 65b, are arranged at equal pitches. Lengths in a circumferential direction of flanges 73 at distal ends of adjoining teeth 65a and 65b are varied so as to provide irregular intervals between centerlines A that extend in a radial direction of openings O1 and O2 of the slot 61 a. The stator core 61 has 48 slots 61 a of mechanical angles of (4.06°-3.44°) and the openings O1 and O2.

The stator core 61 includes two sets of stator windings, namely, the first three-phase stator winding 52 and the second three-phase stator winding 53 with a phase difference of 32.5-degree electrical angle. The rotor 60 has sixteen magnetic poles, one pole covering 2 x 3 phases.

The first three-phase stator winding 52 and the second stator winding 53 are star-connected. Neutral points N of the star connections are electrically connected to the rectifiers 12a and 12b that rectify ac outputs.

The first rectifier 12a for rectifying an ac output from the first stator winding 52 is electrically connected to the first stator winding 52, while the second rectifier 12b for rectifying an ac output from the second stator winding 53 is electrically connected to the second stator winding 53. The outputs of the two stator windings are rectified and then combined.

In the stator core 61 of the automotive alternator having the construction described above, the intervals between the centerlines A extending in the radial direction of the openings O1 and O2 of the slots 61 a are irregular, and the first three-phase stator winding 52 and the second three-phase stator winding 53 are installed with the phase difference of the 32.5-degree electrical angle.

The reasons for the above construction will now be described.

During power generation, a magnetic attractive force is produced between the rotor 60 and the stator 63 because of an interaction between a rotating magnetic field including higher harmonics produced by the claw-shaped magnetic poles 22 and 23 of the rotor 60 and an alternating magnetic field including higher harmonics generated from alternating current produced at a stator winding 16. The electromagnetic attractive force leads to an electromagnetic exciting force of the claw-shaped magnetic poles 22 and 23 and the stator core 61 of the rotor 60, causing vibrations and electromagnetic noises.

The inventor of the application concerned has analyzed the electromagnetic exciting force from a viewpoint of electromagnetic field. The analysis has been carried out, using an automotive alternator that has two three-phase stator windings arranged in parallel and six times as many stator slots as poles.

Electromagnetic noises in the automotive alternator are attributable to electromagnetic exciting forces of three-fold and six-fold orders of the number of poles per revolution. More specifically, when a basic frequency of output current is denoted as f, the electromagnetic noises are caused by electromagnetic exciting forces of a 6f frequency and a 12f frequency. The electromagnetic exciting force of the 6f frequency is produced by the following interactions:
(a) An interaction between a fifth spatial higher harmonic of a magnetomotive higher harmonic of the rotor and the fifth spatial higher harmonic of a magnetomotive higher harmonic of the stator.
(b) An interaction between a seventh spatial higher harmonic of the magnetomotive higher harmonic of the rotor and the seventh spatial higher harmonic of the magnetomotive higher harmonic of the stator.
(c) An interaction between fifth and seventh spatial higher harmonics of the magnetomotive higher harmonic of the rotor and a sixth spatial higher harmonic of a stator slot higher harmonic.

The electromagnetic exciting force of the 12f frequency is produced by the following interactions:
(d) An interaction between an eleventh spatial higher harmonic of the magnetomotive higher harmonic of the rotor and the eleventh spatial higher harmonic of the magnetomotive higher harmonic of the stator.
(e) An interaction between a thirteenth spatial higher harmonic of the magnetomotive higher harmonic of the rotor and the thirteenth spatial higher harmonic of the magnetomotive higher harmonic of the stator.
(f) An interaction between the eleventh and thirteenth spatial higher harmonics of the magnetomotive higher harmonic of the rotor and a twelfth spatial higher harmonic of a stator slot higher harmonic.

Computation on the magnetomotive higher harmonics of the rotor described above is performed using a largest magnetic pole pitch (in a surface of a rotor magnetic pole that faces the stator) of a 246-degree electrical angle and a smallest magnetic pole pitch of a 114-degree electrical angle.

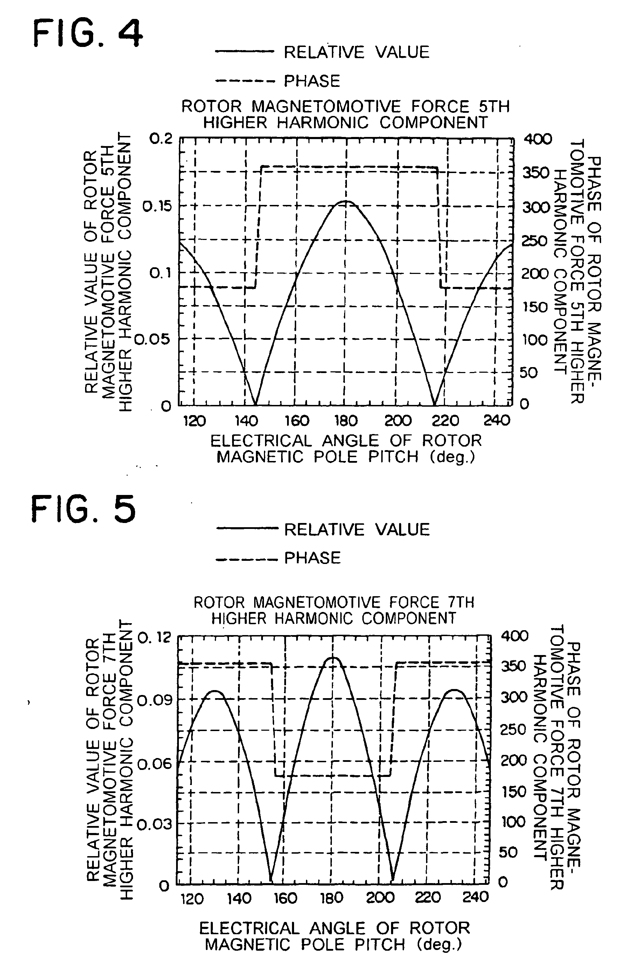

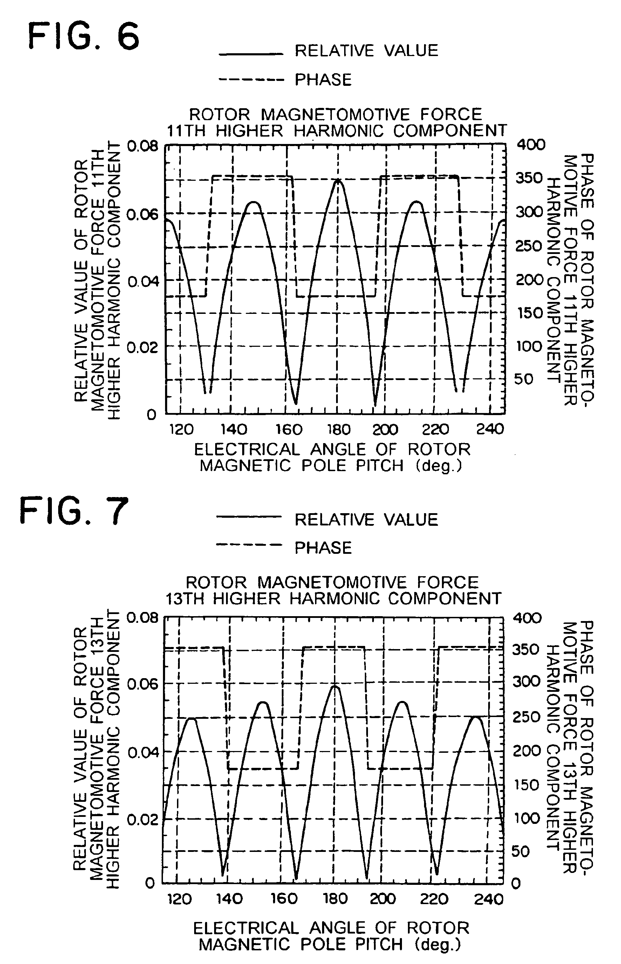

As shown in Figs. 4 through 7, the fifth, seventh, eleventh, and thirteenth spatial higher harmonic components and their phases at the magnetic pole pitches have peaks at every 360°/order, and exhibit waveforms of inverted phases.

Integrating up to 114° to 246° determines a total higher harmonic. It should be noted, however, that the computation is made based on an assumption that the higher harmonic is sinusoidal, and the time-dependent phases are involved in the computation. The computation results are shown in Table 1 below.

**Table 1 Rotor Magnetomotive Force Higher Harmonics**

| | Magnitude | Phase |
|---|---|---|
| | (Relative value) | |
| 5th higher harmonic | 0.105 | 357.5° |
| 7th higher harmonic | 0.106 | 356.5° |
| 11th higher harmonic | 0.0092 | 174.5° |
| 13th higher harmonic | 0.042 | 353.5° |

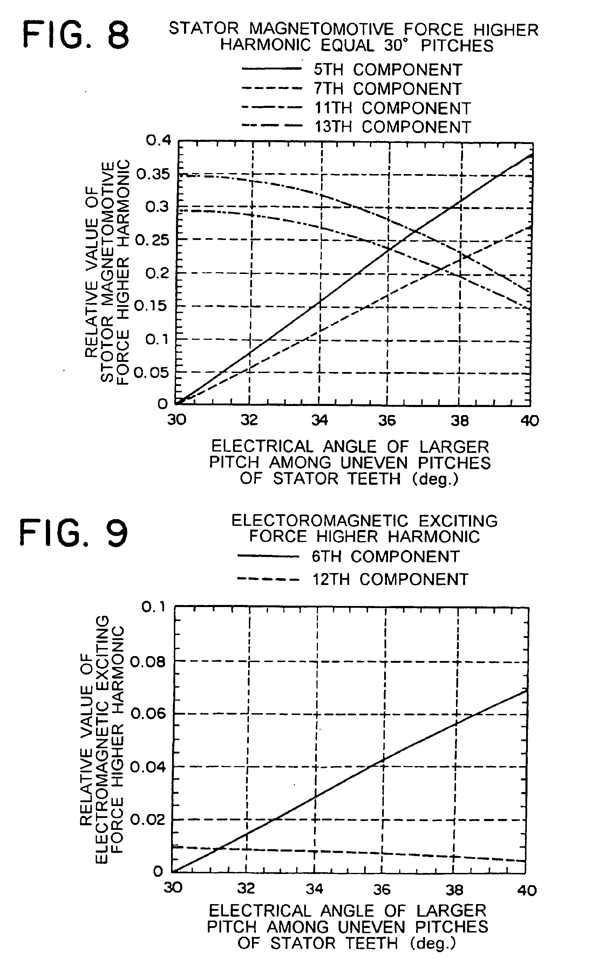

In the stator magnetomotive force higher harmonics, a current phase of each phase depends on the slot opening pitch. Hence, higher harmonics shown in Fig. 8 are produced, which is based on the stator magnetomotive force higher harmonics produced in the case of the slot openings with irregular pitches.

A direction of the stator magnetomotive force higher harmonics and a direction of the rotor magnetomotive force higher harmonics are opposite from each other; therefore, the fifth or seventh higher harmonic of the stator and that of the rotor produce stationary waves. In some cases, however, a sixth electromagnetic force produced by the fifth higher harmonics and a sixth electromagnetic exciting force produced by the seventh higher harmonics may counterbalance each other, so that phases must be taken into account when making a combination.

Fig. 9 shows relative values of the sixth electromagnetic exciting force and the twelfth electromagnetic exciting force that can be computed from the results shown above.

Referring to the chart of Fig. 9, the sixth electromagnetic exciting force becomes the smallest at equal pitches of 30 degrees and proportionally increases as the pitch is increased. The twelfth electromagnetic exciting force becomes the largest at equal pitches of 30 degrees and decreases in inverse proportion as the pitch is increased. It can be understood that a crossing point of the electromagnetic exciting force is approximately 31 degrees.

Thus, slightly shifting the electrical angle phase difference of the three-phase stator windings reduces the twelfth electromagnetic exciting force responsible for unpleasant higher harmonic noises, although the sixth electromagnetic exciting force is increased.

Regarding the wind noises, the irregular pitches of the slot openings will reduce a 12f component, i.e., a 96th component of a rotational order ratio of the alternator. Table 2 shows data regarding the 96th component of a wind noise of the rotor 7 of the embodiment with sixteen magnetic poles produced at a 5000-rpm rotational speed of the alternator. The data is based on values calculated by subjecting major ordinal components in a range of mechanical angles from (3.75°-3.75°) to (4.5°-3.0°) of the slot openings of the irregular pitches, which corresponds to a range of phase difference in electrical angle of 30 to 36 degrees, to discrete Fourier transform to obtain frequency characteristics.

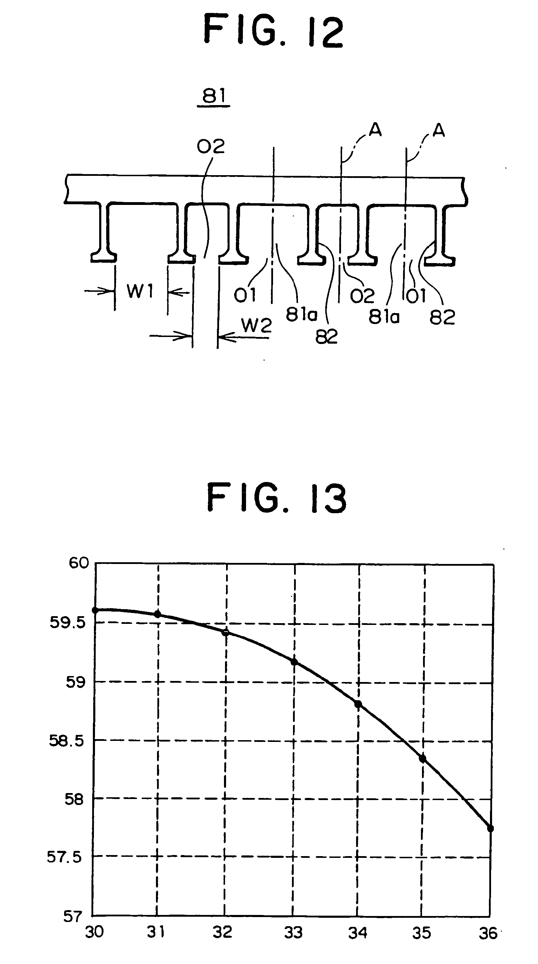

Fig. 13 shows plotted 96th wind noise component values in a frequency range that is regarded to pose a problem in a range of idling to normal speed of the engine when the phase difference in electrical angle lies in a range of 30 to 36 degrees. It is understood that the 96th wind noise component is scattered to components of other orders, so that the 96th component decreases as the phase difference increases, a peak thereof being at a phase difference of a 30-degree electrical angle at equal pitches.

**Table 2**

| | | Order | | |
|---|---|---|---|---|
| Electrical angle phase difference (degree) | Mechanical angle (degree) | 48th | 96th | 144th |
| 30 | 3.75-3.75 | 13.42 | 59.62 | 12.53 |
| 31 | 3.875-3.625 | 34.26 | 59.57 | 4.3 |
| 32 | 4.0-3.5 | 40.28 | 59.43 | 49.22 |
| 33 | 4.125-3.375 | 43.77 | 59.18 | 52.56 |
| 34 | 4.25-3.25 | 46.24 | 58.82 | 54.8 |
| 35 | 4.375-3.125 | 48.12 | 58.34 | 56.39 |
| 36 | 4.5-3.0 | 49.67 | 57.76 | 57.56 |

On the other hand, if wide teeth and narrow teeth are alternately formed to make the slot opening pitches irregular, and especially if the pitches are made extremely irregular, then magnetic saturation undesirably takes place in the narrow teeth, resulting in a reduced amount of magnetic flux supplied to the narrow teeth from the claw-shaped magnetic poles. This causes output to be reduced particularly at low speed (idling mode) at which the rotor 60 runs at 2000 rpm. Furthermore, in the case of three-phase connection combined with full-wave rectification, an output of the first three-phase stator winding and an output of the second three-phase stator winding are balanced and output surges are reduced when the phase difference is a 30-degree electrical angle. This means that output surges increase as the phase difference increases.

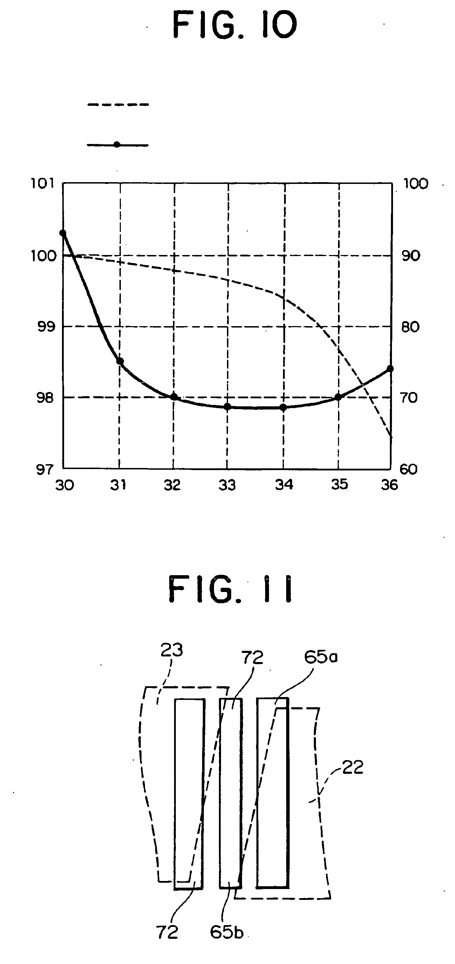

Fig. 10 is a diagram illustrating a relationship between electrical angle phase difference between the first three-phase stator winding and the second three-phase stator winding, low-speed output, and noise level during power generation. The relationship has been experimentally obtained by the inventor of the application concerned, using a 100A-class automotive alternator.

From the chart, it can be seen that the noise level is low and the low-speed output is high when a phase difference in terms of electrical angle of the three-phase stator windings ranges from 31 to 34 degrees. When manufacturing errors of the stator slots are taken into account, an electrical angle phase difference of 32.5 degrees, which is a central value, is the best.

In the automotive alternator as set forth above, the phase difference of electrical angle between the first three-phase stator winding 52 and the second three-phase stator winding 53 is set to 32.5 degrees by setting the slot openings O1 and O2 at irregular pitches. This arrangement reduces the 12f electromagnetic exciting force, that is, the electromagnetic noise attributable to the 96th component of the rotational order ratio, which is extremely unpleasant to the ears. Moreover, since circumferential widths X1 and X2 of the flanges 73 at the distal ends of the adjoining teeth 65a and 65b are irregular, pressure fluctuation in a gap between the stator 63 and the rotor 60 is scattered, making it possible to reduce the 96th wind noise component of the rotational order ratio that is generated in the gap. Hence, mutual interference between the electromagnetic noise and the 96th wind noise component is accordingly reduced, so that the level of noises generated by the alternator is also reduced, suppressing the noises annoying the passengers. However, if the electrical angle phase difference exceeds 34 degrees, components of other orders excessively increase although their contribution to the noise level is small, leading to an increased noise level.

In order to form the irregular pitches of the slots 61 a, the circumferential widths X1 and X2 of the flanges 73 of the adjacent teeth 65a and 65b are made irregular, and the wide flanges 73 and the narrow flanges 73 are alternately formed. Reduction in output caused by magnetic saturation at the narrow flanges 73 in a low-speed range is suppressed.

Furthermore, the chamfered portions 62 formed at the proximal ends of the side surfaces in the rotational direction of the respective claw-shaped magnetic poles 22 and 23 minimize pressure fluctuation in the gap between the rotor 60 and the stator 63, thereby making it possible to reduce the 96th component of the rotational order ratio of the wind noise that is generated in the gap.

The neutral points N of the first three-phase stator winding 52 and the second three-phase stator winding 53 are electrically connected to the rectifiers 12a and 12b, respectively. Therefore, when the alternator is running at high speed, output can be taken out from voltages at the neutral points, permitting more output to be obtained without increasing a noise level.

The first rectifier 12a is electrically connected to the first three-phase stator winding 52, while the second rectifier 12b is electrically connected to the second three-phase stator winding 53, and the outputs of the two windings are combined after they are rectified. This arrangement enables stable outputs without causing the outputs of the two three-phase stator windings 52 and 53 to affect each other. The resultant outputs are large, which is particularly useful for a case wherein only one rectifier is used and a temperature of a diode constituting the rectifier exceeds a permissible temperature.

In this embodiment, the chamfered portions 62 are provided at the proximal ends of the side surfaces at the front with respect to the rotational direction; alternatively, however, they may be provided at the proximal ends of side surfaces at the rear with respect to the rotational direction. In this case, the magnetic flux in the gap will be evenly distributed, so that the magnetic flux generated from the field winding 13 will exhibit a nearly ideal sinusoidal wave, leading to an increased amount of magnetic flux, with resultant higher output at low-speed range.

Fig. 11 is an explanatory diagram of a stator core 71 of an automotive alternator according to the present invention. The circumferential widths of flanges 72 at distal ends of teeth 65a and 65b are set so that the flanges 72 at both axial ends of the teeth 65a and 65b installed between adjoining claw-shaped magnetic poles 22 and 23 overlap proximal ends 22a and 23a of the claw-shaped magnetic poles 22 and 23, as observed from a radial direction. The rest of a construction is the same as outlined above.

Both claw-shaped magnetic poles 22 and 23 always overlap a part of the flanges 72 of the teeth 65a and 65b, as observed from the radial direction during an output. With this arrangement, pressure fluctuation in a gap between a rotor 60 and the stator core 71 can be minimized, and the 96th wind noise component of the rotational order ratio that is generated in the gap can be reduced accordingly.

Moreover, sudden variations in magnetic flux density in the gap are reduced, permitting electromagnetic noises to be reduced.

Fig. 12 is a diagram illustrating, in a flattened fashion, a stator core 81 of an automotive alternator in accordance with the present invention.

Here, a difference to the structure explained above is circumferential widths W1 and W2 of openings O1 and 02 of adjoining slots 81 a are irregular, while circumferential widths of distal ends of teeth 82 are regular. The rest of the construction - including irregular intervals between centerlines A of the openings O1 and O2, is identical to the construction outlined above.

Since the circumferential widths W1 and W2 of the openings O1 and O2 of the slots 81a are irregular, pressure fluctuation in a gap between a rotor 60 and the stator core 81 is scattered, making it possible to reduce the 96th wind noise component of the rotational order ratio that is generated in the gap.

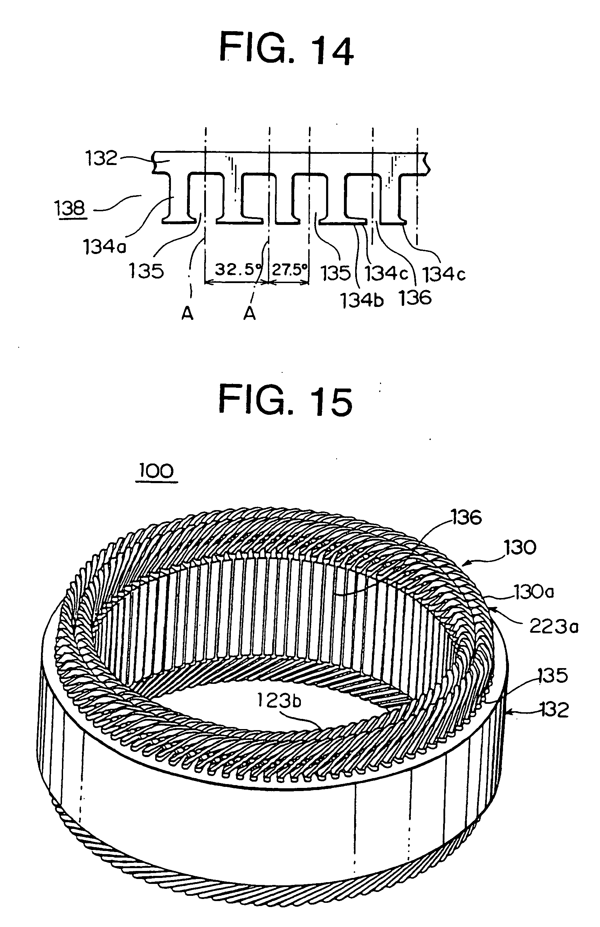

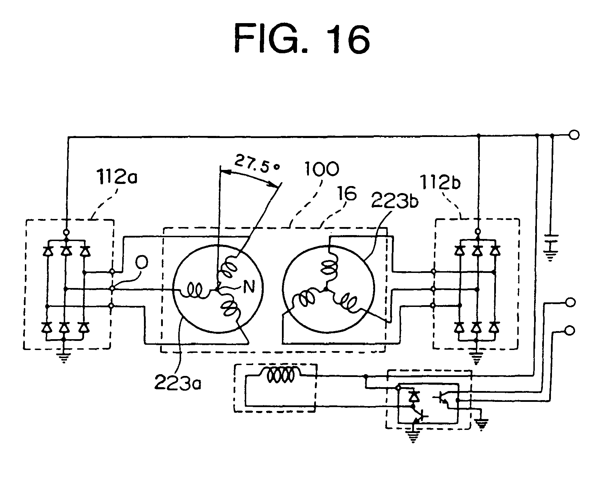

Fig. 14 is a schematic representation of a stator core 132 of a stator 100 of an automotive alternator according to the present invention, the diagram being two-dimensional. Fig. 15 is a perspective view showing the stator 100. Fig. 16 is an electrical circuit diagram of the automotive alternator. Components identical or equivalent to the components of the conventional automotive alternator will be assigned the same reference numerals, and descriptions thereof will not be repeated.

The number of slots 135 of the stator core 132 is one per set, per phase, and per pole. More specifically, there are seventy-two slots 135; however, spaces between centerlines A extending in a radial direction of openings 136 of adjoining slots 135 are nonuniform, and an electrical angle (32.5 degrees - 27.5 degrees) x 36 slots 135 are formed. A phase difference in electrical angle between a first three-phase stator winding 223a and a second three-phase stator winding 223b is 27.5 degrees rather than 30 degrees as in the conventional alternator.

Each of the three-phase stator windings 223a and 223b has a plurality of windings wound such that a lengthy wire 130 is folded back outside the slots 135 at both end surface sides of the stator core 132 and threaded in the slots 135 through inner layers and outer layers alternately in a depth direction of the slots 135 at every predetermined number of slots. Turning portions 130a folded outside the slots 135 at both end surface sides of the stator core 132 constitute a group of coil ends arranged in a circumferential direction.

The first three-phase stator winding 223a and the second three-phase stator winding 223b have star connections, and neutral points N of the star connections are electrically connected to rectifiers 112a and 112b for rectifying AC outputs.

The first rectifier 112a for rectifying AC outputs from the first stator winding 223a is electrically connected to the first stator winding 223a. The second rectifier 112b for rectifying AC outputs from the second stator winding 223b is electrically connected to the second stator winding 223b. The outputs rectified by the two rectifiers are merged.

Here, a width of the main body of a tooth 134 and a distance to an adjoining tooth 134 are the same as those of the conventional stator core 122 shown in Fig. 29. This embodiment, however, is characterized in that a dimension between centerlines A that extend in the radial direction of openings 136 of the adjoining slots 135 is set to be uneven by adjusting a circumferential length of a jaw 134c at a distal end of the tooth 134. As a result, narrow teeth 134a and wide teeth 134b are alternately disposed in the circumferential direction.

It is not necessarily required to form the jaws 134c at the time of punching sheet metal. The jaws 134c may alternatively be formed by machining the distal ends of the teeth 134 after installing the three-phase stator windings 223a and 223b in the stator core 132. The stator core 132 may be formed by rolling and overlapping sheet metal or by laminating.

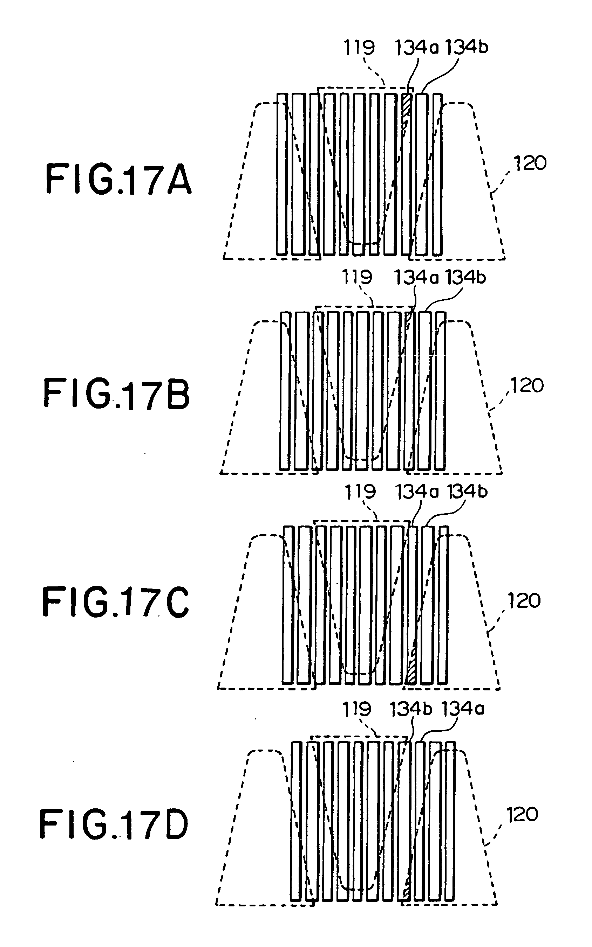

Fig. 17 illustrates positional relationships between the teeth 134, the slots 135, and the claw-shaped magnetic poles 119 and 120 in accordance with the embodiment. Fig. 17A illustrates a state wherein the narrow tooth 134a overlaps only the claw-shaped magnetic pole 119, Fig. 17B illustrates a state wherein the narrow tooth 134a overlaps the claw-shaped magnetic poles 119 and 120, Fig. 17C illustrates a state wherein the narrow tooth 134a overlaps only the claw-shaped magnetic pole 120, and Fig. 17D illustrates a state wherein the wide tooth 134b overlaps the claw-shaped magnetic poles 119 and 120. Thus, in this embodiment, the circumferential widths of the teeth 134a and 134b are made small as in the case of the conventional automotive alternator, and the time during which magnetic fluxes leak to the teeth 134a and 134b is short. Accordingly, as in the case of the conventional automotive alternator, a reduction in the effective magnetic fluxes for the stator windings 223a and 223b caused by leakage magnetic fluxes is small, allowing pulsation in magnetic fluxes to be controlled.

Furthermore, in the construction of the present embodiment, as observed from the rotor, the distal ends of the wide teeth 134a and the narrow teeth 134b alternately face the claw-shaped magnetic fields having the two opposite polarities. Therefore, as compared with the one having teeth of the same shape disposed at the same pitch, only half as many as teeth are required for the distal ends of teeth having different shapes to face the opposite polarities alternately, causing all fluctuations in generated voltages to be scattered. This means that the present embodiment is able to reduce invalid magnetic fluxes and also to restrain fluctuations.

Unlike the conventional automotive alternator, however, center-to-center distances between the gaps of adjoining teeth 134a and 134b are set to 32.5 degrees and 27.5 degrees alternately in terms of electrical angle by the jaws 134c having different circumferential lengths. The two sets of the three-phase coils wound around the teeth will have a phase difference of 27.5 degrees. In the stator 138 having the construction, as shown in Fig. 32, the magnetomotive force higher harmonics of the stator 138 that represents a magnetic flux density waveform falls at the spatial eleventh and thirteenth higher harmonics, while it rises at the fifth and seventh magnetomotive force higher harmonics of the stator 138, as compared with the conventional case having the 30-degree electrical angle. Hence, uncomfortable noises can be reduced, and undulation of magnetic fluxes generated by the alternator is reduced, resulting in restrained voltage fluctuation.

In order to prevent noises uncomfortable to occupants from being produced, it is generally desirable to set a permissible upper limit value of the higher harmonics to approximately 13%. For this reason, satisfactory results can be usually obtained as long as the center-to-center distances or intervals of the circumferential gaps of the openings of the slots 135 are set to be uneven within a range from the one repeatedly alternates between 16 degrees and 44 degrees to the one repeatedly alternates between 29 degrees and 31 degrees.

The foregoing jaws 134c may be formed at the time of punching sheet metal, or formed by machining the distal ends of the teeth after the three-phase stator windings 223a and 223b are installed.

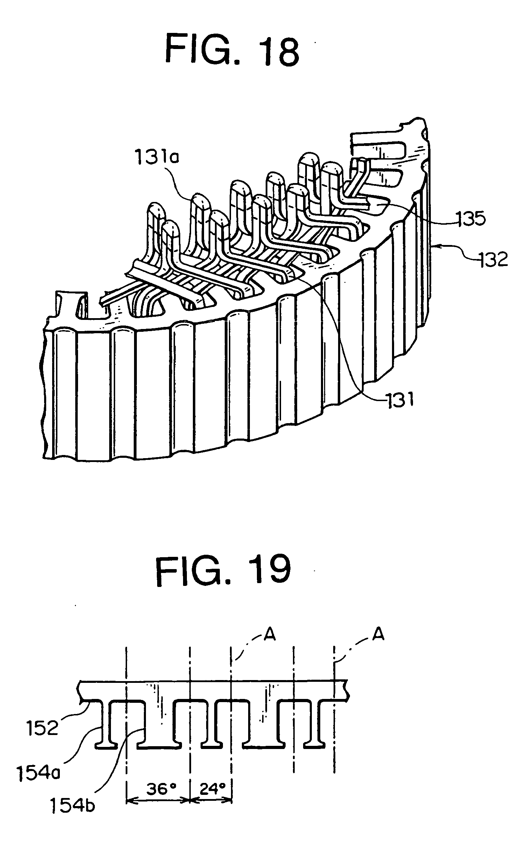

In the embodiment, the stator windings 223a and 223b have the lengthy wire 130 folded back outside the slots 135 and threaded in the slots 135 through inner layers and outer layers alternately in a depth direction of the slots 135 at every predetermined number of slots, as explained above; the present invention, however, is not limited thereto. As an alternative, as shown in Fig. 18, a plurality of substantially U-shaped short coil pieces 131 may be inserted from one axial end of the stator core 132, and coil piece ends 131a projected at the ends of the stator core 132 are connected at every predetermined number of coil pieces thereby to configure a sequential circuit.

The structure in which the stator windings 223a and 223b formed of the lengthy wire 130 folded back outside the slots 135 and threaded in the slots 135 through inner layers and outer layers alternately in a depth direction of the slots 135 at every predetermined number of slots are advantageous over the structure in which the substantially U-shaped short coil pieces 131 are inserted from one axial end of the stator core 132, and the coil piece ends 131 a projected at the ends of the stator core 132 are connected. The advantage includes higher productivity and suppression of vibration of the stator 100 because of absence of welded places and also because of higher coil rigidity.

Fig. 19 is a schematic representation of a stator core 152 of an automotive alternator according to the present invention, the diagram being two-dimensional.

This embodiment is the same as outlined above except that the widths of the main bodies of teeth 154a and 154b defining a plurality of slots are uneven and that the phase difference between two sets of three-phase coils is 24 degrees.

In this embodiment, if magnetic fluxes passing through the narrow tooth 154a increase, then magnetic saturation is stimulated, whereas the magnetic saturation is eased in the adjoining wide tooth 154b, resulting in an increase in the output of the alternator.

The upper limit value of higher harmonics can be set to approximately 8% by setting the center-to-center distance or interval of the circumferential gaps of the openings of the slots 135 at nonuniform intervals within a range from the one repeatedly alternates between 22 degrees and 38 degrees to the one repeatedly alternates between 24 degrees and 36 degrees. Thus, the fifth, seventh, eleventh, and thirteenth higher harmonics can be reduced in good balance.

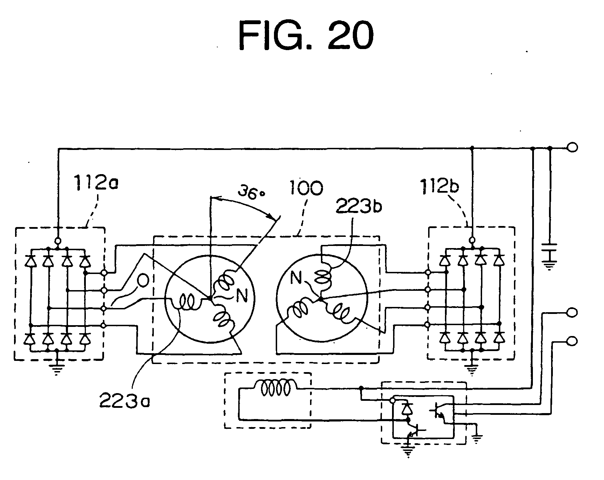

Fig. 20 is an electrical circuit diagram of an automotive alternator according to the present invention.

Neutral points N of three-phase stator windings 223a and 223b are electrically connected to rectifiers 112a and 112b, respectively. Therefore, when the alternator is running at high speed, outputs can be taken out from the neutral point voltages, allowing outputs to be improved.

The first rectifier 112a is electrically connected to the first stator winding 223a, and the second rectifier 112b is electrically connected to the second stator winding 223b, and the outputs rectified by the two rectifiers are merged. Hence, stable outputs can be obtained without affecting the outputs of the stator windings 223a and 223b. Although pulsation increases due to output currents from the neutral points, the uneven pitches restrain uncomfortable noises as in the case of the embodiment described above.

Above, the descriptions have been given of the automotive alternator that has a total of 96, 72 slots and a total of 16, 12 claw-shaped magnetic poles. Obviously, however, the present invention can also be applied, for example, to an automotive alternator that has a total of 120 slots and a total of 20 claw-shaped magnetic poles.

Furthermore, above, the windings are formed of the conductor, which is a continuous wire; however, the windings may alternatively be composed by connecting numerous "U-shaped" conductor segments.

In the embodiments, the field winding is included in the rotor. The present invention, however, can be also applied to a type of alternator in which a field winding is secured to a case, and magnetic flux is supplied to a pole core of a rotor via an air gap to form a magnetic pole. It is also obvious that an application of the present invention is not limited to automotive alternators.

As described above, in the alternator according to the present invention, spaces between centerlines extending in a radial direction of openings of adjoining ones of the slots are irregularly formed, and the first three-phase stator winding and the second three-phase stator winding are wound around the stator core with a phase difference of an electrical angle of 31 to 34 degrees. Thus, the alternator in accordance with the present invention makes it possible to reduce electromagnetic noises and wind noises of the 12f component, which is an extremely unpleasant higher harmonic noise to the ears, thereby permitting reduced uncomfortable noises. In addition, a drop in output caused by a phase difference can be reduced.

Moreover, a circumferential width of a tooth may be set such that both ends of a tooth located between adjoining claw-shaped magnetic poles overlap proximal ends of the two claw-shaped magnetic poles, as observed from a radial direction. Thus, pressure fluctuation in the gap between the rotor and the stator is minimized, and the 12f component of a wind noise, which is an extremely unpleasant higher harmonic noise produced in the gap, can be reduced accordingly.

The 12f component of an electromagnetic noise, which is an extremely unpleasant higher harmonic noise, can be also reduced.

Moreover, according to another form of the alternator, side surfaces of the claw-shaped magnetic poles may have chamfered portions. Thus, the alternator in accordance with the invention features less pressure fluctuation in the gap between the rotor and the stator, enabling the 12f component of the wind noise generated in the gap to be reduced. Moreover, the magnetic flux in the gap will be evenly distributed so that the magnetic flux generated from the field winding will exhibit a nearly ideal sinusoidal wave, leading to an increased amount of magnetic flux, with resultant higher output at low-speed range.

Moreover, the three-phase stator windings may have star connections, and neutral points of the star connections may be electrically connected to rectifiers for rectifying ac output. Thus, the alternator according to the invention allows output to be taken out from voltage at the neutral points when the alternator is running at high speed, so that higher output can be achieved without affecting a noise level.

Moreover, circumferential widths of the openings of the slots may be regular, while circumferential widths of distal ends of adjoining teeth may be irregular. Thus, pressure fluctuation in the gap between the stator and the rotor is scattered, so that the 12f component of wind noises that is an extremely unpleasant higher harmonic noise to the ears is reduced.

Moreover, circumferential widths of the openings of adjoining ones of the slots may be irregular, while circumferential widths of distal ends of the teeth may be regular. Thus, pressure fluctuation in the gap between the stator and the rotor is scattered, so that the 12f component of wind noises that is an extremely unpleasant higher harmonic noise to the ears is reduced.

Moreover, the first three-phase stator winding and the second three-phase stator winding may be wound around the stator core with a phase difference of a 32.5-degree electrical angle. Thus, even if slot pitches have some manufacturing errors, electromagnetic noises and wind noises of the 12f component, which are extremely uncomfortable higher harmonic noises, can be securely reduced, and a drop in output attributable to a phase difference can also be securely suppressed.

Also, in the alternator according to the present invention, the alternator may include a stator having a stator core in which a plurality of slots that open on an inner peripheral side and extend in an axial direction and two or more sets of stator windings incorporated in the slots; and a rotor having a rotor coil rotatably provided inside the stator to generate magnetic fluxes on the passage of electric current and a pole core which covers the coil and in which a plurality of claw-shaped magnetic poles are formed by the magnetic fluxes, the number of the slots per set, per phase, and per pole being one, the stator windings being disposed such that two sets of three-phase coils are different from each other in phase, and center-to-center intervals of circumferential gaps of adjoining slot openings being set to be unequal, wherein the claw-shaped magnetic poles of the rotor are formed such that at least a narrow tooth formed between slots of an opposing stator is positioned to overlap two claw-shaped magnetic poles that are adjacent in a direction of rotation of the rotor and have opposite polarities. With this arrangement, even when the plurality of teeth formed in the circumferential direction include the teeth that are narrower in the circumferential direction because of the unequal circumferential widths, a state wherein a predetermined tooth overlaps adjoining claw-shaped magnetic poles is maintained, so that a magnetic flux density will not be decreased, permitting improved output efficiency proportional to the magnetic flux density. Moreover, as observed from the rotor, the distal ends of the wide and narrow teeth alternately face the claw-shaped magnetic fields having the two opposite polarities. Therefore, as compared with the one having teeth of the same shape arranged at the same pitch, only half as many teeth are required for the teeth having different shapes with their distal ends facing the opposite polarities alternately, causing all fluctuations in generated voltages to be scattered. This means that invalid magnetic fluxes are reduced and fluctuations can be restrained.

Furthermore, the center-to-center intervals of the circumferential gaps of adjoining slot openings are formed repeatedly at electrical angles of α degrees and (60-α) degrees, the α degrees ranging from 16 degrees to 29 degrees. With this arrangement, two sets of three-phase coils are formed, so that the electrical angles of the intervals of the centerlines that extend in the radial direction of the slot openings can be set to be nonuniform so that the three-phase coils have a phase difference from each other without changing interphase differences in each of the three-phase coils, that is, without causing a drop in output. This makes it possible to reduce order components of spatial magnetic flux higher harmonics attributable to electromagnetic noises.

The center-to-center intervals of the circumferential gaps of adjoining slot openings are formed repeatedly at electrical angles of α degrees and (60-α) degrees, the α degrees ranging from 22 degrees to 24 degrees. With this arrangement, the fifth, seventh, eleventh, and thirteenth higher harmonics can be reduced in good balance.

Each of the teeth that define slots of the stator core has a jaw extending from a distal end portion thereof on at least one end in a circumferential direction, and the center-to-center intervals of circumferential gaps of adjoining slot openings are set to be nonuniform based on an extending length of the jaw. Thus, the center-to-center intervals of the gaps of adjacent slot openings are adjusted by the length of the jaws, permitting easier adjustment of the intervals.

The center-to-center intervals of the circumferential gap of adjoining slot openings are set to be unequal based on circumferential widths of teeth that define the slots of the stator core. With this arrangement, since the circumferential widths of the teeth are unequal, if magnetic fluxes passing through the narrow teeth increase, then magnetic saturation is stimulated, whereas the magnetic saturation is eased in the adjoining wide teeth, resulting in an increased output.

The stator winding is a three-phase stator winding of star connection, and a neutral point of the star connection is electrically connected to a rectifier for rectifying an AC output. With this arrangement, when the alternator is running at high speed, outputs can be taken out from the neutral point voltages, allowing outputs to be improved.

In conclusion, above there has been described an alternator comprising a stator (63) having a stator core (61) in which a plurality of slots (61a, 81a) are formed on an inner periphery thereof by teeth extending in an axial direction, and first and second three-phase stator windings (32, 42, 52, 53) installed in the slots (61a, 81a); and a rotor (60) rotatably provided inside the stator (63) and which has a field winding that generates magnetic flux on passage of electric current, and a pole core which covers the field winding and in which a plurality of claw-shaped magnetic poles (22, 23) are formed by the magnetic flux, a number of the slots (61a, 81a) being two per pole per phase, wherein spaces between centrelines extending in a radial direction of openings (01, 02) of adjoining ones of the slots (61a, 81a) are irregularly formed, and the first three-phase stator winding (32, 42, 52) and the second three-phase stator winding (53) are wound around the stator core (61) with a phase difference of an electrical angle of 31 to 34 degrees.

Preferably, a circumferential width of a tooth (65a, 65b) is set such that both ends of a tooth (65a, 65b) located between adjoining claw-shaped magnetic poles (22, 23) overlap proximal ends of the two claw-shaped magnetic poles (22, 23), as observed from a radial direction.

Preferably, side surfaces of the claw-shaped magnetic poles (22, 23) have chamfered portions.

Preferably, the three-phase stator windings (32, 42, 52, 53) have star connections, and neutral points of the star connections are electrically connected to rectifiers (12a, 12b) for rectifying ac output.

Preferably, circumferential widths of the openings (01, 02) of the slots (61a) are regular, while circumferential widths of distal ends of adjoining teeth (65a, 65b) are irregular.

Preferably, circumferential widths of the openings of adjoining ones of the slots (81a) are irregular, while circumferential widths of distal ends of the teeth (82) are regular.

Preferably, the first three-phase stator winding (52) and the second three-phase stator winding (53) are wound around the stator core with a phase difference of a 32.5-degree electrical angle.

Also, there has been described a stator (138) having a stator core (132) in which a plurality of slots (135) that open on an inner peripheral side and extend in an axial direction and two or more sets of stator windings (223a, 223b) incorporated in the slots (135); and a rotor (106) having a rotor coil (115) rotatably provided inside the stator (138) to generate magnetic fluxes on the passage of electrical current and a pole core (116) which covers the coil (115) and in which a plurality of claw-shaped magnetic poles (119, 120) are formed by the magnetic fluxes, the number of the slots (135) being one per set, per phase, and per pole, the stator windings being disposed such that two sets of three-phase coils (223a, 223b) have a phase difference from each other, and center-to-center intervals of circumferential gaps of adjoining slot openings being non-uniform, wherein the claw-shaped magnetic poles (119, 120) of the rotor (106) are formed such that at least a narrow tooth of teeth (134a, 134b) formed between the slots (135) of the opposing stator (138) is positioned to overlap two of the claw-shaped magnetic poles (119, 120) that are adjacent in a direction of rotation of the rotor (106) and have opposite polarities.

Preferably, the center-to-center intervals of the circumferential gaps of the adjoining slots openings are repeatedly set at electrical angles of α degrees and (60-α) degrees, the α degrees ranging from 16 degrees to 29 degrees.

Preferably, the center-to-center intervals of the circumferential gaps of the adjoining slot openings are repeatedly set at electrical angles of α degrees and (60-α) degrees, the α degrees ranging from 22 degrees to 24 degrees.

Preferably, each of the teeth (134) that define the slots (135) of the stator core (132) has a jaw (134c) extending from a distal end portion thereof on at least one end in a circumferential direction, and the center-to-center intervals of the circumferential gaps of adjoining slot openings are set to be non-uniform based on an extending length of the jaw.

Preferably, the center-to-center intervals of circumferential gaps of the adjoining slot openings are set to be non-uniform based on circumferential widths of the teeth (134a, 134b) that define the slots (135) of the stator core (132).

Preferably, the stator windings (223a, 223b) are three-phase stator windings of star connections, and neutral points (N) of the star connections are electrically connected to the rectifiers (112a, 112b).

## Claims

1. An alternator, comprising:
a stator (138) having a stator core (132) in which a plurality of slots (135) open on an inner peripheral side and extend in an axial direction and two or more sets of stator windings (223a, 223b) are incorporated in the slots (135); and
a rotor (106) having a rotor coil (115) rotatably provided inside the stator (138) to generate magnetic fluxes on the passage of electric current and a pole core (116) which covers the coil (115) and in which a plurality of claw-shaped magnetic poles (119, 120) are formed by the magnetic fluxes,
wherein the circumferential widths of flanges (72) at distal ends of teeth (65a, 65b) are set so that the flanges (72) at both axial ends of the teeth (65a, 65b) installed between adjoining claw-shaped magnetic poles (22, 23) overlap proximal ends of the claw-shaped magnetic poles (22, 23) as observed from a radial direction,
the number of the slots (135) being one per set, per phase, and per pole, **characterized by** the stator windings being disposed such that two sets of three-phase coils (223a, 223b) have a phase difference of 32 to 36° from each other, and center-to-center intervals of circumferential gaps of adjoining slot openings being non-uniform.

2. An alternator according to claim 1, wherein the center-to-center intervals of the circumferential gaps of the adjoining slot openings are repeatedly set at electrical angles of α degrees and (60-α) degrees, the α degrees ranging from 16 degrees to 29 degrees.

3. An alternator according to claim 1, wherein the center-to-center intervals of the circumferential gaps of the adjoining slot openings are repeatedly set at electrical angles of α degrees and (60-α) degrees, the α degrees ranging from 22 degrees to 24 degrees.

4. An alternator according to any one of claims 1 to 3, wherein each of the teeth (134) that define the slots (135) of the stator core (132) has a jaw (134c) extending from a distal end portion thereof on at least one end in a circumferential direction, and the center-to-center intervals of the circumferential gaps of adjoining slot openings are set to be non-uniform based on an extending length of the jaw.

5. An alternator according to any one of claims 1 to 3, wherein the center-to-center intervals of circumferential gaps of the adjoining slot openings are set to be non-uniform based on circumferential widths of the teeth (134a, 134b) that define the slots (135) of the stator core (132).

6. An alternator according to any one of claims 1 to 5, wherein the stator windings (223a, 223b) are three-phase stator windings of star connections, and neutral points (N) of the star connections are electrically connected to the rectifiers (112a, 112b).

## Patentansprüche

1. Ein Wechselstromgenerator, umfassend:
einen Ständer (138) mit einem Ständerkern (132), worin sich eine Vielzahl von Schlitzen (135) zu einer inneren Peripherieseite öffnen und in einer axialen Richtung erstrecken, und zwei oder mehr Mengen von Ständerwicklungen (223a, 223b) in die Schlitze (135) einbezogen sind; und
einen Rotor (106) mit einer Rotorspule, der drehend innerhalb des Ständers (138) bereitgestellt ist, um magnetische Flüsse in dem Durchlauf eines elektrischen Stroms zu generieren, und einem Polkern (116), der die Spule (115) abdeckt und worin eine Vielzahl klauenförmiger Magnetpole (119, 120) durch die magnetischen Flüsse ausgebildet werden,
wobei die umlaufenden Breiten von Flanschen (72) in distalen Enden von Zähnen (65a, 65b) so eingestellt sind, dass die Flansche (72) in beiden axialen Enden der Zähne (65a, 65b) zwischen angrenzenden klauenförmigen magnetischen Polen (22, 23) proximale Enden der klauenförmigen magnetischen Pole (22, 23) überlappen, wie von einer radialen Richtung gesehen,
wobei die Anzahl der Schlitze (135) eine pro Menge, pro Phase und pro Pol ist, **gekennzeichnet durch** die Ständerwicklungen, die derart angeordnet sind, dass zwei Mengen von dreiphasigen Spulen (223a, 223b) eine Phasendifferenz von 32 bis 36° voneinander haben, und wobei Intervalle von Mitte zum Mitte von umlaufenden Lücken aneinander grenzender Schlitzöffnungen nicht gleichförmig sind.

2. Ein Wechselstromgenerator nach Anspruch 1, wobei die Intervalle von Mitte zu Mitte der umlaufenden Lücken der aneinander grenzenden Schlitzöffnungen wiederholt in elektrischen Winkeln von α Grad und (60-α) Grad eingestellt sind, wobei die α Grad von 16 Grad bis 29 Grad reichen.

3. Ein Wechselstromgenerator nach Anspruch 1, wobei die Intervalle von Mitte zu Mitte der umlaufenden Lücken der aneinander grenzenden Schlitzöffnungen wiederholt in elektrischen Winkeln von α Grad und (60-α) Grad eingestellt sind, wobei die α Grad von 22 Grad bis 24 Grad reichen.

4. Ein Wechselstromgenerator nach einem beliebigen von Ansprüchen 1 bis 3, wobei jeder der Zähne (134), die die Schlitze (135) des Ständerkerns (133) definieren, eine Klaue (134c) hat, die sich von einem distalen Endabschnitt davon in mindestens einem Ende in einer umlaufenden Richtung erstreckt, und die Intervalle von Mitte zu Mitte der umlaufenden Lücken von aneinander grenzenden Schlitzöffnungen eingestellt sind, nicht-gleichförmig zu sein basierend auf einer sich erstreckenden Länge der Klaue.

5. Ein Wechselstromgenerator nach einem beliebigen von Ansprüchen 1 bis 3, wobei die Intervalle von Mitte zu Mitte von umlaufenden Lücken der aneinander grenzenden Schlitzöffnungen eingestellt sind, nicht-gleichförmig zu sein basierend auf umlaufenden Breiten der Zähne (134a, 134b), die die Schlitze (135) des Ständerkerns (132) definieren.

6. Ein Wechselstromgenerator nach einem beliebigen von Ansprüchen 1 bis 5, wobei die Ständerwicklungen (223a, 223b) dreiphasige Ständerwicklungen von Sternverbindungen sind, und neutrale Punkte (N) der Sternverbindungen mit den Gleichrichtern (112a, 112b) elektrisch verbunden sind.

## Revendications

1. Alternateur comprenant :
un stator (138) ayant un noyau (132) de stator dans lequel une pluralité d'encoches (135) s'ouvrent sur un côté périphérique interne et s'étendent dans une direction axiale et deux ou plusieurs ensembles d'enroulements (223a, 223b) de stator sont incorporés dans les encoches (135) ; et
un rotor (106) ayant une bobine de rotor (115) prévue de manière rotative à l'intérieur du stator (138) pour générer des flux magnétiques au passage du courant électrique et un noyau magnétique (116) qui recouvre la bobine (115) et dans lequel une pluralité de pôles magnétiques en forme de griffe (119, 120) est formée par les flux magnétiques,
dans lequel les largeurs circonférentielles des rebords (72) au niveau des extrémités distales des dents (65a, 65b) sont déterminées de sorte que les rebords (72) au niveau des deux extrémités axiales des dents (65a, 65b) installées entre les pôles magnétiques (22, 23) en forme de griffe attenants chevauchent sur les extrémités proximales des pôles magnétiques (22, 23) en forme de griffe, comme observé à partir d'une direction radiale,
le nombre d'encoches (135), étant de un par ensemble, par phase et par pôle, **caractérisé par** les enroulements de stator qui sont disposés de sorte que deux ensembles de bobines triphasées (223a, 223b) ont une différence de phase de 32 à 36° l'un par rapport à l'autre, et les intervalles centre à centre des espaces circonférentiels des ouvertures d'encoche attenantes étant non uniformes.

2. Alternateur selon la revendication 1, dans lequel les intervalles de centre à centre des espaces circonférentiels des ouvertures d'encoche attenantes sont déterminés de manière répétée selon des angles électriques de α degrés et (60 - α) degrés, les α degrés allant de 16 degrés à 29 degrés.

3. Alternateur selon la revendication 1, dans lequel les intervalles de centre à centre des espaces circonférentiels des ouvertures d'encoche attenantes sont déterminés de manière répétée selon des angles électriques de α degrés et (60 - α) degrés, les α degrés allant de 22 degrés à 24 degrés.

4. Alternateur selon l'une quelconque des revendications 1 à 3, dans lequel chacune des dents (134) qui définissent les encoches (135) du noyau (132) de stator a une mâchoire (134c) s'étendant à partir de sa partie d'extrémité distale sur au moins une extrémité dans une direction circonférentielle, et les intervalles centre à centre des espaces circonférentiels des ouvertures d'encoche attenantes sont déterminés pour être non uniformes en fonction d'une longueur d'extension de la mâchoire.

5. Alternateur selon l'une quelconque des revendications 1 à 3, dans lequel les intervalles centre à centre des espaces circonférentiels des ouvertures d'encoche attenantes sont déterminés pour être non uniformes en fonction des largeurs circonférentielles des dents (134a, 134b) qui définissent les encoches (135) du noyau (132) de stator.

6. Alternateur selon l'une quelconque des revendications 1 à 5, dans lequel les enroulements (223a, 223b) de stator sont des enroulements de stator triphasés à connexion en étoile, et les points neutres (N) des connexions en étoile sont raccordés électriquement aux rectificateurs (112a, 112b).
